# EUROPÄISCHE PATENTSCHRIFT

(11) **EP 0 277 914 B1**
(45) Veröffentlichungstag und Bekanntmachung des Hinweises auf die Patenterteilung: **07.09.1994**
(21) Anmeldenummer: 88810037.7
(22) Anmeldetag: 25.01.1988
(51) Int. Cl.: C09B 67/22, C08K 5/34

(54) **Feste Lösungen von Pyrrolo-[3,4-c]-pyrrolen mit Chinacridonen**
Solid solutions of pyrrolo-[3,4-c]-pyrroles with quinacridones
Solutions solides de pyrrolo-[3,4-c]-pyrroles avec des quinacridones

(30) Priorität: 02.02.1987 US 9868
(43) Veröffentlichungstag der Anmeldung: 10.08.1988
(73) Patentinhaber: CIBA-GEIGY AG, 4002 Basel (CH)
(72) Erfinder: Jaffe, Edward Ephraim, Dr., Wilmington Delaware 19810 (US); Bäbler, Fridolin, Dr., CH-1723 Marly (CH)

(56) Entgegenhaltungen:
- EP-A- 0 061 426
- EP-A- 0 190 999

## Beschreibung

Die vorliegende Erfindung betrifft feste Lösungen von 1,4-Diketopyrrolo-[3,4-c]-pyrrolen mit Chinacridonen.

Es ist bekannt, dass man unter bestimmten Voraussetzungen mit zwei oder mehreren Pigmenten derselben Klasse feste Lösungen mit verbesserten Eigenschaften erhalten kann. So sind z.B. in den US-Patenten 3 160 510, 3 298 847, 3 647 494 und 3 681 100 feste Lösungen von Chinacridonpigmenten, im US-Patent 3 554 776 und in den DE-OS 2 009 073, 3 436 206, 3 436 208 und 3 436 209 feste Lösungen von Perylentetracarbonsäurediimiden beschrieben. Aus dem US-Patent 4 286 998 sind feste Lösungen von Chinacridonchinonpigmenten mit 2-Anilinoacridon, das selbst kein Pigment ist, bekannt. Aus dem US-Patent 3 341 345 ist auch bekannt, dass feste Lösungen bestimmter Chinacridone mit spezifischen N,N'-Diaryldiamino-Verbindungen, die selbst auch keine Pigmente sind, eine verbesserte Lichtechtheit aufweisen.

Die Verwendung von Pyrrolo-[3,4 c]-pyrrolen als Pigmente ist z.B. aus dem US-Patent 4 415 685 bekannt. Diese Verbindungen haben sich im allgemeinen als Pigmente hervorragender Qualität erwiesen, können allerdings, je nach Anwendungsgebiet, nicht immer voll befriedigen.

Die EP-A-0 190 999 beschreibt ein Verfahren zur Herstellung farbstarker Pigmente, wonach u.a., im Beispiel 17, auch die Herstellung eines Diketopyrrolo-pyrrol/Chinacridon-Pigmentgemisches beschrieben wird. Bei dem so erhaltenen Produkt handelt es sich aber um eine physikalische Mischung der zwei Pigmente und nicht um eine feste Lösung.

Es ist nun gefunden worden, dass bestimmte Pyrrolo-[3,4-c]-pyrrole überraschenderweise mit Pigmenten einer ganz anderen Klasse, nämlich mit Chinacridonen, feste Lösungen mit verbesserten Pigmenteigenschaften bilden.

Die vorliegende Erfindung betrifft demnach feste Lösungen von Pyrrolo-[3,4-c]-pyrrolen und Chinacridonen, enthaltend
a) mindestens eine Verbindung der Formeln 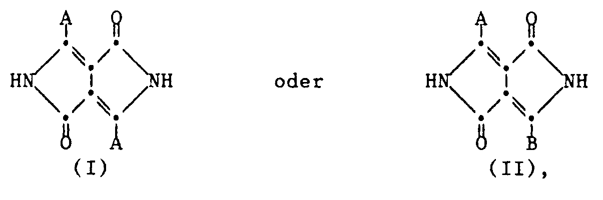 worin A und B unabhängig voneinander eine der Gruppen der Formeln 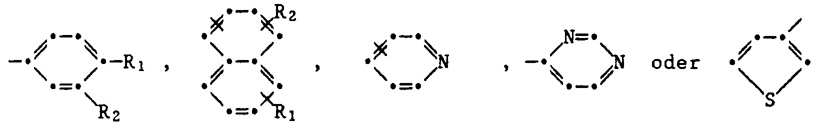 bedeuten, worin R₁ und R₂ unabhängig voneinander Wasserstoff, Halogen, C₁-C₅-Alkyl, C₁-C₅-Alkoxy, -SR₃, -N(R₃)₂, -CF₃, -CN oder eine Gruppe der Formeln 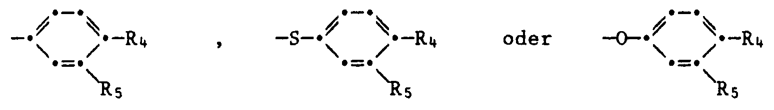 bedeuten, R₃ C₁(C₁-C₅)-C₅-Alkyl ist und R₄ und R₅ unabhängig voneinander Wasserstoff, Halogen, C₁-C₅-Alkyl, C₁-C₅-Alkoxy, -SR₃ oder -CN bedeuten, und
b) mindestens eine lineare Chinacridonverbindung der Formeln 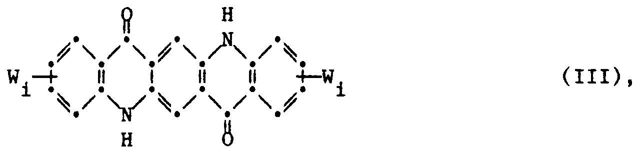 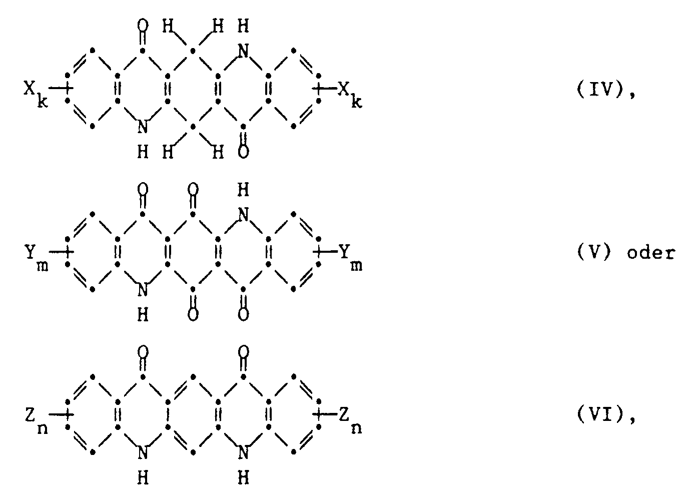 worin W, X, Y und Z unabhängig voneinander Halogen, C₁-C₅-Alkyl, C₁-C₅-Alkoxy und i, k, m und n Null, 1 oder 2 bedeuten, wobei sich die Röntgenbeugungsdiagramme der festen Lösungen von der Summe der Röntgenbeugungsdiagramme der Einzelkomponenten unterscheiden.

Bedeuten etwaige Substituenten Halogen, so handelt es sich dabei z.B. um Fluor, vorzugsweise Brom und insbesondere Chlor.

Bedeuten etwaige Substituenten C₁-C₅-Alkyl, so meint man damit z.B. Methyl, Ethyl, n-Propyl, Isopropyl, n-Butyl, sec.-Butyl, tert.-Butyl, n-Pentyl, Isopentyl, Neopentyl oder tert.-Pentyl.

Etwaige Substituenten, die C₁-C₅-Alkoxy bedeuten, stellen z.B. Methoxy, Ethoxy, n-Propoxy, n-Butoxy, sec.-Butoxy, n-Pentyloxy, Isopentyloxy oder Neopentyloxy dar.

Von besonderem Interesse sind
- feste Lösungen enthaltend mindestens eine Verbindung der Formeln I oder II mit der oben angegebenen Bedeutung, und eine Chinacridonverbindung der Formel III, worin W Chlor oder Methyl und i Null oder 1 bedeuten;
- feste Lösungen enthaltend mindestens eine Verbindung der Formeln I oder II mit der oben angegebenen Bedeutung, eine Chinacridonverbindung der Formel V, worin m Null bedeutet und eine Chinacridonverbindung der Formel IV, worin k Null ist;
- feste Lösungen enthaltend mindestens eine Verbindung der Formeln I oder II mit der oben angegebenen Bedeutung, eine Chinacridonverbindung der Formel V, worin m Null bedeutet und eine Chinacridonverbindung der Formel III, worin i Null ist;
- feste Lösungen enthaltend mindestens eine Verbindung der Formeln I und II mit der oben angegebenen Bedeutung, und je eine Chinacridonverbindung der Formeln III, IV und V, worin, i, k und m Null bedeuten.

Von ganz besonderem Interesse sind erfindungsgemässe feste Lösungen, die eine Verbindung der Formel I mit der oben angegebenen Bedeutung und mindestens eine Verbindung der Formeln III, IV, V oder VI, mit der zuerst angegebenen Bedeutung, enthalten.

Bevorzugt sind erfindungsgemässe feste Lösungen, die eine Verbindung der Formel I enthalten, worin A eine Gruppe der Formeln 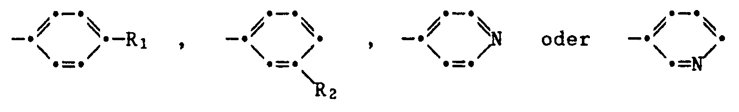
bedeutet, worin R₁ Wasserstoff, Chlor, Brom, Cyano, Methyl, Ethyl, tert.-Butyl oder Phenyl und R₂ Wasserstoff, Chlor, Methyl oder Cyano bedeuten.

Besonders bevorzugt ist eine feste Lösung enthaltend die beiden Verbindungen der Formeln 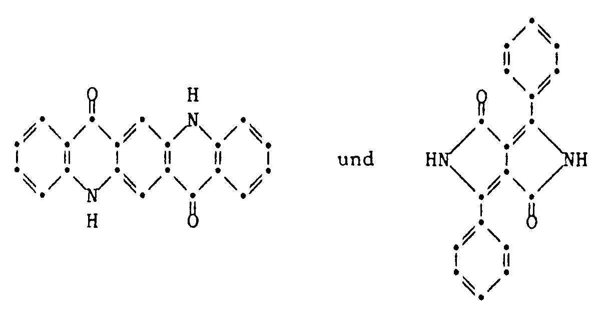
In den erfindungsgemässen festen Lösungen beträgt das Verhältnis
I und/oder II : III und/oder IV und/oder V und/oder VI
zweckmässig 5-95 : 95-5, bevorzugt 10-90 : 90-10 Gew. %.

Chinacridonchinone der Formel V bilden mit den Verbindungen der Formeln I und II besonders leicht feste Lösungen. Die Verbesserung der Pigmenteigenschaften ist bei solchen Chinacridonchinone enthaltenden festen Lösungen dann am stärksten, wenn sie Gemische von Chinacridonchinonen der Formel V mit Chinacridonen der Formel III und/oder der Formel IV enthalten. Dabei sind Gemische bevorzugt, die auf 1 Gewichtsteil Chinacridonchinon der Formel V 0,05-0,75 Gewichsteile Chinacridon der Formel III und/oder IV enthalten.

Obgleich die so erhaltenen festen Lösungen sehr gute Licht- und Wetterbeständigkeiten aufweisen, ist es in bestimmten Fällen möglich, durch Zugabe von ausgewählten Additiven, wie bestimmte Metallsalze, beispielsweise basisches NiCO₃ oder MnCO₃, oder organische Verbindungen, wie Anilinoacridon, vor, nach oder während der Bildung der festen Lösungen, diese Beständigkeiten noch weiter zu verbessern. Dazu werden zweckmässig 2-20 Gew. % Additiv, bezogen auf die feste Lösung, eingesetzt. Die so erhaltenen Pigmente weisen ausgezeichnete Licht- und Wetterbeständigkeiten auf, die beispielsweise den Erfordernissen der Technik für Automobillacke voll genügen.

Die erfindungsgemässen festen Lösungen können ausgehend von physikalischen Mischungen der oben definierten Komponenten der Formeln I und/oder II mit III und/oder IV und/oder V und/oder VI nach folgenden an und für sich bekannten Verfahren hergestellt werden:
- durch Kontaktierung in polaren organischen Lösungsmitteln, bevorzugt durch Verrühren der Komponentenmischung bei Rückflusstemperatur;
- durch saure Umfällung, d.h. Auflösung der Komponentenmischung in Säure und Fällung der festen Lösung durch Verdünnen mit Wasser oder
- durch intensive Mahlung oder Knetung der Komponentenmischung, gegebenenfalls mit anschliessender Rekristallisation in Wasser und/oder organischen Lösungsmitteln.

Als polare organische Lösungsmittel in deren Gegenwart die Einzelkomponenten zur Bildung der erfindungsgemässen festen Lösungen kontaktiert werden, können beispielsweise Dimethylformamid, N-Methylformamid, Tetramethylharnstoff, Dimethylacetamid, N-Methylpyrrolidon, Dimethylsulfoxid, Tetramethylsulfon, Eisessig, Ketone, wie Cyclohexanon, Alkohole, wie n-Butanol, Cyclohexanol oder Benzylalkohol, ferner Ethylenglykol, Propylenglykol, Ether, wie Ethylenglykoldimethylether, Diphenylether oder Anisol, sowie aromatische Kohlenwasserstoffe, wie Nitrobenzol, Chlorbenzol, Dichlor- und Trichlorbenzole, Toluole und Xylole oder Ester, wie Ethylacetat oder Butylacetat, erwähnt werden.

Für die saure Umfällung eignen sich insbesondere Schwefel- und Polyphosphorsäure. Das auf diese Art erhaltene Pigment ist sehr feinkristallin und wird deshalb bevorzugt durch Erwärmung der sauren wässrigen Pigmentsuspension mit oder ohne organischem Lösungsmittel rekristallisiert.

Bevorzugt werden die erfindungsgemässen festen Lösungen ausgehend von den physikalischen Komponentenmischungen durch Mahlung oder Knetung, beispielsweise Salzknetung in Gegenwart eines organischen Lösungsmittels wie Diacetonalkohol, hergestellt.

Besonders bevorzugte Mahlverfahren sind Trockenmahlung, Trockensalzmahlung, Mahlung in einem organischen Lösungsmittel und/oder Wasser. Dabei können als Mahlkörper Metall-, Glas- oder Keramikkugeln, Kunststoffgranulat oder Sandkörner, wie für Pigmente allgemein üblich, verwendet werden.

Die Mahlungen und Knetungen werden zweckmässig bei Temperaturen zwischen 5 und 90°C, vorzugsweise zwischen 15 und 60°C, durchgeführt.

Bei der Trockensalzmahlung werden bevorzugt Kochsalz, CaCl₂, Na₂SO₄ oder Al₂(SO₄)₃ mit oder ohne Kristallwasser verwendet. Auf 100 bis 150 Gewichtsteile Salz werden beispielsweise 10 bis 50 Gewichtsteile Pigment verwendet. Dabei kann es von Vorteil sein, dem Mahlmedium geringe Mengen an Lösungsmitteln wie Xylol oder Tetrachlorethylen und/oder Tensiden, wie z.B. Dodecylbenzolsulfonsäure-natriumsalz oder -isopropylammoniumsalz, zuzufügen. Die Aufarbeitung erfolgt nach an sich bekannter Methode, indem das Pigment/Salzgemisch von den Mahlkörpern getrennt, dann in Wasser gegeben wird, und die erhaltene Pigmentsuspension danach abfiltriert wird.

Wässrige Mahlungen der physikalischen Pigmentmischungen können mit oder ohne Mahlhilfsmittel, wie sie beispielsweise in EP-A-101 666 beschrieben sind, durchgeführt werden. Dabei kann es von Vorteil sein, den pH-Wert vom neutralen in den sauren oder alkalischen Bereich zu verschieben.

Obwohl die erfindungsgemässen festen Lösungen ausgezeichnete applikatorische Eigenshaften aufweisen, kann est vorteilhaft sein, dem Pigment Texturschutzmittel zuzufügen.

Geeignete Texturschutzmittel sind beispielsweise Fettsäuren mit mindestens 12 C-Atomen, wie Stearinsäure oder Behensäure, deren Amide, Ester oder Salze, wie Magnesium-, Zink- oder Aluminiumstearat oder Magnesiumbehenat, ferner quaternäre Ammoniumverbindungen, wie Tri-(C₁-C₄)-alkylbenzylammoniumsalze, ferner Weichmacher, wie epoxidiertes Sojabohnenöl, Wachse, wie Polyethylenwachs, Harzsäuren, wie Abietinsäure, Kolophoniumseife, hydriertes oder dimerisiertes Kolophonium, C₁₂-C₁₈-Paraffindisulfonsäuren, Alkylphenole oder Alkohole, wie Stearylalkohol, ferner Lauryl- oder Stearylamin, sowie aliphatische 1,2-Diole, wie Dodecandiol-1,2.

Bevorzugte Texturschutzmittel sind Lauryl- oder Stearylamin, aliphatische 1,2-Diole, Stearinsäure, deren Amide, Salze oder Ester, epoxidiertes Sojabohnenöl, Wachse oder Harzsäuren.

Solche Zusatzstoffe können in Mengen von 0,05 bis 20, bevorzugt 1 bis 10 Gew.% bezogen auf die feste Pigmentlösung, vor, während oder nach deren Bildung zugegeben werden.

Feste Lösungen können durch ihr Röntgenbeugungsspektrum gekennzeichnet werden, welches sich von demjenigen des physikalischen Gemisches der beiden Einzelkomponenten unterscheidet. Das Röntgenbeugungsdiagramm der erfindungsgemässen festen Lösungen ist durch andere Linien als die Summe der Röntgenbeugungsdiagramme der Einzelkomponenten gekennzeichnet.

Die erfindungsgemässen festen Lösungen eignen sich ausgezeichnet als Pigmente zum Färben von hochmolekularem organischem Material. Sie weisen gegenüber den Ausgangspigmenten unterschiedliche koloristische Eigenschaften auf und können je nach dem Herstellungsverfahren in transparenter oder deckender Form vorliegen. Durch thermische Nachbehandlung in organischen Lösungsmitteln lassen sie sich beispielsweise gut rekristallisieren, d.h. man erhält eine deckende Form mit einer einheitlichen Pigmentpartikelgrösse und -form. Vorzugsweise verwendet man als organische Lösungsmittel z.B. durch Halogenatome, Alkyl- oder Nitrogruppen substituierte Benzole, wie Xylole, Chlorbenzol, o-Dichlorbenzol oder Nitrobenzol, sowie Pyridinbasen, wie Pyridin, Picolin oder Chinolin, ferner Keteon, wie Cyclohexanon, Alkohole, wie Isopropanol, Butanole, Pentanole, oder Tricyclodecanalkohole, Ether, wie Ethylenglykomonomethyl- oder -monoethylether, Amide, wie Dimethylformamid oder N-Methylpyrrolidon, sowie Dimethylsulfoxid oder Sulfolan.

Hochmolekulare organische Materialien, die mit den erfindungsgemässen festen Lösungen gefärbt bzw. pigmentiert werden können, sind z.B. Celluloseether und -ester, wie Ethylcellulose, Nitrocellulose, Celluloseacetat oder Cellulosebutyrat, natürliche Harze oder Kunstharze, wie Polymerisations- oder Kondensationsharze, wie Aminoplaste, insbesondere Harnstoff- und Melamin-Formaldehydharze, Alkydharze, Phenoplaste, Polycarbonate, Polyolefine, Polystyrol, Polyvinylchlorid, Polyamide, Polyurethane, Polyester, ABS, Polyphenylenoxide, Gummi, Casein, Silikon und Silikonharze, einzeln oder in Mischungen.

Besonders geeignet sind die erfindungsgemässen festen Lösungen zum Einfärben von Polyvinylchlorid und Polyolefinen, wie Polyethylen und Polypropylen, sowie zum Pigmentieren von Lacken und Anstrichstoffen, insbesondere Automobildecklacken.

Mit den erfindungsgemässen festen Lösungen lassen sich in Gemisch mit anderen Pigmenten vorteilhafte neue Nuancen einstellen. In transparenter Form eignen sie sich auch ganz besonders für Metalleffektlackierungen.

Die erwähnten hochmolekularen organischen Verbindungen können einzeln oder in Gemischen als plastiche Massen, Schmelzen oder in Form von Spinnlösungen, Lacken, Anstrichstoffen oder Druckfarben vorliegen. Je nach Verwendungszweck erweist es sich als vorteilhaft, die erfindungsgemässen festen Lösungen als Toner oder in Form von Präparaten einzusetzen.

Bezogen auf das zu pigmentierende hochmolekulare organische Material kann man die erfindungsgemässen festen Lösungen in einer Menge von 0,01 bis 30 Gew.%, vorzugsweise von 0,1 bis 10 Gew. %, einsetzen.

Die Pigmentierung der hochmolekularen organischen Substanzen mit den erfindungsgemässen festen Lösungen erfolgt beispielsweise derart, dass man eine solche feste Lösung, gegebenenfalls in Form von Masterbatches, diesen Substraten unter Verwendung von Walzwerken, Misch- oder Mahlapparaten zumischt. Das pigmentierte Material wird hierauf nach an sich bekannten Verfahren, wie Kalandrieren, Pressen, Strangpressen, Streichen, Giessen oder Spritzgiessen, in die gewünschte endgültige Form gebracht. Oft ist es erwünscht, zur Herstellung von nicht starren Formlingen oder zur Verringerung ihrer Sprödigkeit den hochmolekularen Verbindungen vor der Verformung sogenannte Weichmacher einzuverleiben. Als solche können z.B. Ester der Phosphorsäure, Phthalsäure oder Sebacinsäure dienen. Die Weichmacher können vor oder nach der Einverleibung der erfindungsgemässen festen Lösungen in die Polymeren eingearbeitet werden. Zwecks Erzielung verschiedener Farbtöne ist es ferner möglich, den hochmolekularen organischen Stoffen neben den erfindungsgemässen festen Lösungen noch Füllstoffe bzw. andere farbgebende Bestandteile, wie Weiss-, Bunt- oder Schwarzpigmente, in beliebigen Mengen zuzufügen.

Zum Pigmentieren von Lacken, Anstrickstoffen und Druckfarben werden die hochmolekularen organischen Materialien und die erfindungsgemässen festen Lösungen gegebenenfalls zusammen mit Zusatzstoffen, wie Füllmitteln, anderen Pigmenten, Siccativen oder Weichmachern, in einem gemeinsamen organischen Lösungsmittel oder Lösungsmittelgemisch fein dispergiert bzw. gelöst. Man kann dabei so verfahren, dass man die einzelnen Komponenten für sich oder auch mehrere gemeinsam dispergiert bzw. löst, und erst hierauf alle Komponenten zusammenbringt.

In Färbungen, beispielsweise von Polyvinylchlorid oder Polyolefinen, zeichnen sich die erfindungsgemässen festen Lösungen durch gute allgemeine Pigmenteigenschaften, wie gute Dispergierbarkeit, hohe Farbstärke und Reinheit, gute Migrations-, Hitze, Licht- und Wetterbeständigkeit aus.

Die nachfolgenden Beispiele erläutern die Erfindung.

Beispiel 1: In eine Kugelmühle mit einem Inhalt von ca. 1 Liter, enthaltend 1,5 kg Stahlkugeln (⌀: 1,2 cm) und 150 g Nägel (Länge 3 cm) als Mahlkörper, werden 11,5 g γ-Chinacridon, 3,5 g 3,6-Diphenyl-1,4-diketopyrrolo-[3,4-c]-pyrrol, 2,4 ml Tetrachlorethylen, 0,75 g Benzoldodecylsulfonsäure-Na-Salz und 135 g Aluminiumsulfat [Al₂(SO₄)₃·15-18 H₂O] gegeben. Die gut verschlossene Mühle wird während 72 Stunden auf einer Rollbank bei Raumtemperatur gerollt. Danach wird das Mahlmedium von den Mahlkörpern abgetrennt und in einer Lösung von 2,75 ml konzentrierter Schwefelsäure in 500 ml Wasser während 2 Stunden bei 70°C gerührt. Das Pigment wird abfiltriert, der Presskuchen wird mit heissem Wasser neutral und salzfrei gewaschen, im Vakuumtrockenschrank bei 80°C getrocknet, und die erhaltene Ware wird gepulvert. Man erhält 13,5 g einer roten festen Pigmentlösung, deren Röntgenbeugungsdiagramm sich vom Röntgenbeugungsdiagramm der entsprechenden physikalischen Mischung der obengenannten Ausgangsprodukte unterscheidet. Beim Einarbeiten in Kunststoffe und Lacke erhält man farbstarke rote Ausfärbungen mit ausgezeichneten Beständigkeiten.

Zu demselben Resultat gelangt man, wenn man anstelle von Benzoldodecylsulfonsäure-Na-Salz eine äquivalente Menge des entsprechenden Isopropylammoniumsalzes verwendet.

Beispiel 2: 45,6 g γ-Chinacridon und 14,4 g 3,6-Diphenyl-1,4-diketopyrrolo-[3,4-c]-pyrrol werden in 200 ml konzentrierter Schwefelsäure während 2 1/2 Stunden bei Raumtemperatur unter Rührung gelöst. Die Schwefelsäurelösung wird unter Stickstoffdruck in einer Mischdüse in Wasser gepresst. Dabei werden folgende Temperaturen gemessen: Pigment-Schwefelsäurelösung: 27°C, Wasser: 25°C, Ausfluss aus Mischdüse: 50°C. Die erhaltene saure Pigmentsuspension wird auf 35°C gekühlt und 1 1/2 Stunden bei dieser Temperatur verrührt. Danach wird die Suspension abfiltriert, der Presskuchen wird mit Wasser neutral gewaschen, im Vakuumtrockenschrank bei 80°C getrocknet, und die erhaltene Ware wird gepulvert. Man erhält 57 g einer roten festen Pigmentlösung, deren Röntgenbeugungsdiagramm sich vom Röntgenbeugungsdiagramm der entsprechenden physikalischen Mischung der obengenannten Ausgangsprodukte unterscheidet. Beim Einarbeiten in Kunststoffe und Lacke erhält man farbstarke rote Ausfärbungen mit ausgezeichneten Beständigkeiten.

Beispiel 3: Verfährt man analog wie in Beispiel 1 beschrieben, rekristallisiert aber die isolierte feste Pigmentlösung durch Verrühren derselben in n-Butanol bei Raumtemperatur während 4 Stunden, so erhält man eine rote feste Pigmentlösung, deren Röntgenbeugungsdiagramm sich vom Röntgenbeugungsdiagramm der entsprechenden physikalischen Mischung der obengenannten Ausgangsprodukte unterscheidet. In Automobillacken weist das Pigment sehr gute rheologische Eigneschaften auf und die entsprechenden Lackierungen sind ausgezeichnet wetterbeständig.

Beispiel 4: Verfährt man analog wie in Beispiel 1 beschrieben, verwendet aber anstelle von 11,5 g γ-Chinacridon 3,9 g 2,9-Dichlorchinacridon und anstelle von 3,5 g 3,6-Diphenyl-1,4-diketopyrrolo-[3,4-c]-pyrrol 11,1 g 3,6-Di(4-chlorphenyl)-1,4-diketopyrrolo-[3,4-c]-pyrrol, so erhält man eine rote feste Pigmentlösung, deren Röntgenbeugungsdiagramm sich vom Röntgenbeugungsdiagramm der entsprechenden physikalischen Mischung der obengenannten Ausgangsprodukte unterscheidet. Beim Einarbeiten in Kunststoffe und Lacke erhält man sehr farbstarke rote Ausfärbungen hoher Sättigung und Transparenz mit ausgezeichneten Beständigkeiten.

Beispiel 5: Verfährt man analog wie in Beispiel 1 beschrieben, verwendet aber anstelle von 11,5 g γ-Chinacridon 11,7 g Chinacridonchinon und anstelle von 3,5 g 3,3 g 3,6-Diphenyl-1,4-diketopyrrolo-[3,4-c]-pyrrol, so erhält man 14,5 g einer orangefarbigen festen Pigmentlösung, deren Röntgenbeugungsdiagramm sich vom Röntgenbegeungsdiagramm der entsprechenden physikalischen Mischung der obengenannten Ausgangsprodukte unterscheidet. In Kunststoffen und Lacken ergibt diese feste Pigmentlösung sehr farbstarke orange Ausfärbungen mit guten Beständigkeiten.

Beispiel 6: Verfährt man analog wie im Beispiel 5 beschrieben, verwendet aber anstelle von 11,7 g 11,6 g Chinacridonchinon und anstelle von 3,3 g 3,4 g 3,6-Di(4-methylphenyl)-1,4-diketopyrrolo-[3,4-c]-pyrrol, so erhält man eine orangefarbige feste Pigmentlösung, deren Röntgenbeugungsdiagramm sich vom Röntgenbeugungsdiagramm der entsprechenden physikalischen Mischung der obengenannten Ausgangsprodukte unterscheidet. In Kunststoffen und Lacken ergibt diese feste Pigmentlösung farbstarke orange Ausfärbungen mit guten Beständigkeiten.

Beispiel 7: Verfährt man analog wie in Beispiel 5 beschrieben, verwendet aber anstelle von 11,7 g 8,1 g Chinacridonchinon und anstelle von 3,3 g 6,9 g 3,6-Diphenyl-1,4-diketopyrrolo-[3,4-c]-pyrrol, so erhält man eine orangefarbige feste Pigmentlösung, deren Röntgenbeugungsdiagramm sich vom Röntgenbeugungsdiagramm der entsprechenden physikalischen Mischung der obengenannten Ausgangsprodukte unterscheidet. In Kunststoffen und Lacken ergibt diese feste Pigmentlösung farbstarke rotorange Ausfärbungen mit guten Beständigkeiten.

Beispiel 8: In einem Glasgefäss werden 6 g Chinacridonchinon, 1,5 g 3,6-Diphenyl-1,4-diketopyrrolo-[3,4-c]-pyrrol und 1,0 g Dihydrochinacridon während 2 1/2 Stunden in 50 ml konzentrierter Schwefelsäure verrührt. Das Gemisch wird unter Rühren in ca. 10 Minuten auf Eis-Wasser getropft. Die entstandene Pigmentsuspension wird während 3 Stunden bei 80°C verrührt, heiss abfiltriert, der Presskuchen wird mit heissem Wasser neutral gewaschen, im Vakuumtrockenschrank bei 80°C getrocknet, und die erhaltene Ware wird gepulvert. Man erhält 8,0 g einer orangefarbigen festen Pigmentlösung, deren Röntgenbeugungsdiagramm sich vom Röntgenbeugungsdiagramm der entsprechenden physikalischen Mischung der obengenannten Ausgangsprodukte unterscheidet. In Kunststoffen und Lacken erhält man mit dieser festen Pigmentlösung sehr farbstarke orange Ausfärbungen mit guten Beständigeiten.

Beispiel 9: Verfährt man analog wie in Beispiel 8 beschrieben, verwendet aber anstelle von 1,5 g 3,0 g 3,6-Diphenyl-1,4-diketopyrrolo-[3,4-c]-pyrrol, schlämmt den erhaltenen neutral gewaschenen Presskuchen nochmals in 200 ml Wasser an, versetzt die Pigmentsuspension mit 2,0 g NiSO₄·6H₂O, stellt das pH mit 10 %iger wässeriger Sodalösung auf 8,7, wobei basisches NiCO₃ auf das Pigment fällt, filtiert die Suspension ab, wäscht den Presskuchen mit Wasser, trocknet und pulvert ihn, so erhält man eine orangefarbige feste Pigmentlösung, deren Röntgenbeugungsdiagramm sich vom Röntgenbeugungsdiagramm der entsprechenden physikalischen Mischung der obengenannten Ausgangsprodukte unterscheidet.

In Kunststoffen und Lacken erhält man damit sehr farbstarke orangerote Ausfärbungen mit sehr guten Licht-, Hitze- und Migrationsbeständigkeiten.

Beispiel 10: In eine Kugelmühle mit einem Inhalt von ca. 1 Liter, enthaltend 1,5 kg Stahlkugeln (⌀:1,2 cm) 150 g Nägel (Länge = 3 cm) als Mahlkörper, werden 4,0 g γ-Chinacridon, 0,6 g Dihydrochinacridon und 0,6 g 3,6-Di(4-chlorphenyl)-1,4-diketopyrrolo-[3,4-c]-pyrrol, 0,7 ml Tetrachlorethylen, 0,3 g Benzoldodecylsulfonsäure-isopropylammoniumsalz und 20 g Aluminiumsulfat (Al₂(SO₄)₃·15-18H₂O) gegeben. Die gut verschlossene Mühle wird während 6 Stunden auf einer Rollbank bei Raumtemperatur gerollt. Danach wird das Mahlmedium von den Mahlkörpern abgetrennt und in einer Lösung von 2,5 ml conc. Schwefelsäure in 500 ml Wasser während 2 Stunden bei 70°C gerührt. Das Pigment wird abfiltriert, der Presskuchen mit heissem Wasser neutral und salzfrei gewaschen, im Vakuumtrockenschrank bei 80°C getrocknet, und die erhaltene Ware gepulvert. Man erhält 4,9 g einer roten festen Pigmentlösung, deren Röntgenbeugungsdiagramm sich vom Röntgenbeugungsdiagramm der entsprechenden physikalischen Mischung der obengenannten Ausgangsprodukte unterscheidet. Beim Einarbeiten in Kunststoffe und Lacke erhält man farbstarke rote Ausfärbungen mit ausgezeichneten Beständigkeiten.

Beispiel 11: Verfährt man analog wie in Beispiel 10 beschrieben, verwendet aber anstelle von 4,0 g 3,1 g γ-Chinacridon, anstelle von 0,6 g Dihydrochinacridon 1,1 g 4,11-Dichlorchinacridon und anstelle von 0,6 g 1,0 g 3,6-Di(4-chlorphenyl)-1,4-diketopyrrolo-[3,4-c]-pyrrol, so erhält man eine rote feste Pigmentlösung, deren Röntgenbeugungsdiagramm sich vom Röntgenbeugungsdiagramm der entsprechenden physikalischen Mischung der obengenannten Ausgangsprodukte unterscheidet. Beim Einarbeiten in Kunststoffe und Lacke erhält man sehr farbstarke rote Ausfärbungen mit ausgezeichneten Hitze-, Licht-, Migrations- und Wetterbeständigkeiten.

Beispiel 12: Verfährt man analog wie in Beispiel 11 beschrieben, verwendet aber anstelle von 3,6-Di(4-chlorphenyl)-1,4-diketopyrrolo-[3,4-c]-pyrrol 3,6-Diphenyl-1,4-diketopyrrolo-[3,4-c]-pyrrol so erhält man eine feste Pigmentlösung mit ebensoguten Eigenschaften.

Beispiel 13: Eine Mischung von 130 g Steatitkugeln von 8 mm Durchmesser, 47,5 g Alkydmelamineinbrennlack, bestehend aus 60 g Alkydharz ®BECKOSOL 27-320 (Reichhold Chemie AG) 60 %-ig in Xylol, 36 g Melaminharz ®SUPER-BECKAMIN 13-501 (Reichhold Chemie AG) 50 %-ig in Xylol:Butanol (2:1-Gemisch), 2 g Xylol und 2 g Ethylenglykolmonomethylether, und 2,5 g der nach Beispiel 1 erhaltenen Pigmentlösung werden in einer 200 ml fassenden Glasflasche mit "Twist-off"-Verschluss während 120 Stunden auf einem Rollgestell dispergiert. Nach Abtrennen der Steatitkugeln werden 2,4 g der so dispergierten Volltonmischung mit 60 g Titandioxid ®KRONOS RN 59 (Kronos Titan GmbH) und weiteren 24,0 g des obigen Alkydmelamineinbrennlacks vermischt. Das erhaltene Gemisch wird auf Aluminiumbleche gespritzt und anschliessend während 30 Minuten bei 130°C eingebrannt. Man erhält rote Ausfärbungen mit ausgezeichneten Beständigkeiten.

Beispiel 14: Eine Mischung von
130 g Steatitkugeln (⌀ = 8 mm)
45,5 g eines thermohärtenden Acryllacks, bestehend aus 41,3 g Acrylharz ®VIACRYL VC 373, 60 % (VIANOVA Kunstharz AG),
16,3 g Melaminharz ®MAPRENAL TTX, 55 % (HOECHST AG),
32,8 g Xylol,
4,6 g Ethylglykolacetat,
2,0 g Butylacetat und
1,0 g ®Silikonöl A, 1 % in Xylol (BAYER AG), und
2,5 g der nach Beispiel 2 erhaltenen festen Pigmentlösung
werden in einer 200 ml Glasflasche mit "Twist-off"-Verschluss während 72 Stunden auf einem Rollgestell dispergiert. Nach Abtrennen der Steatitkugeln werden 8,0 g der so dispergierten Volltonmischung, 0,6 g Aluminium-Paste ®ALCOA, (60-65 % Al-Gehalt, Aluminium Corp. of America), 1,0 g Methylethylketon und 18,4 g des oben erwähnten thermohärtenden Acryllacks gut vermischt, das erhaltene Gemisch wird auf Aluminiumbleche gespritzt und anschliessend während 30 Minuten bei 130°C eingebrannt. Man erhält sehr farbstarke rote Metalleffektlackierungen mit ausgezeichneten Beständigkeiten.

Beispiel 15: Eine Mischung von 1,0 g der nach Beispiel 6 erhaltenen festen Pigmentlösung, 1,0 g Antioxydans (IRGANOX® 1010, CIBA-GEIGY AG) und 1000 g Polyethylen-HD Granulat (®VESTOLEN A 60-16, HUELS) wird während 15 Minuten in einer Glasflasche auf einer Rollbank vorgemischt. Danach wird die Mischung in zwei Passagen auf einem Einwellenextruder extrudiert, das so erhaltene Granulat auf der Spritzgussmaschine (Allround Aarburg 200) bei 220°C zu Platten verspritzt und 5 Minuten bei 180°C nachgepresst. Die Pressplatten weisen farbstarke orange Nuancen mit ausgezeichneten Beständigkeiten auf.

Beispiele 16: 0,6 g der gemäss Beispiel 8 erhaltenen festen Pigmentlösung wird mit 67 g Polyvinylchlorid, 33 g Dioctylphthalat, 2 g Dibutylzinndilaurat und 2 g Titandioxid vermischt und auf einem Walzenstuhl während 15 Minuten bei 160°C zu einer dünnen Folie verarbeitet. Die so erzeugte orange PVC-Folie ist sehr farbstark, migrations- und lichtbeständig.

Beispiel 17: 1000 g Polypropylengranulat (®DAPLEN PT-55, Chemie LINZ) und 20 g eines 50 %-igen Pigmentpräpartes, bestehend aus 10 g der nach Beispiel 4 erhaltenen festen Pigmentlösung und 10 g Mg-Behenat, werden in einer Mischtrommel intensiv vermischt. Das so behandelte Granulat wird bei 260 bis 285°C nach dem Schmelzspinnverfahren versponnen. Man erhält rotgefärbte Fasern mit sehr guten Licht- und textilen Echtheiten.

## Patentansprüche (Patentansprüche für folgende(n) Vertragsstaat(en): DE, GB, FR, IT, CH, LI)

1. Feste Lösungen von Pyrrolo-[3,4-c]-pyrrolen und Chinacridonen, enthaltend
a) mindestens eine Verbindung der Formeln 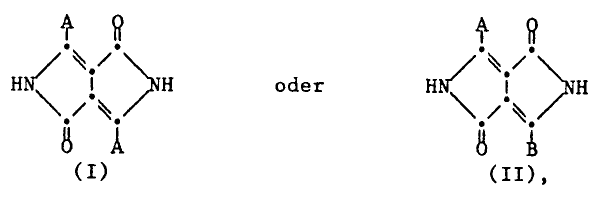 worin A und B unabhängig voneinander eine der Gruppen der Formeln 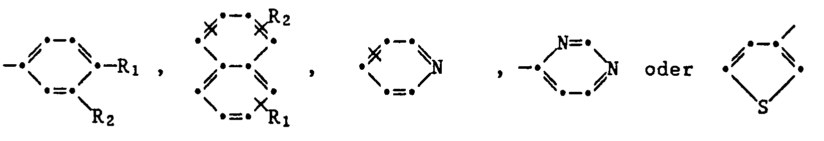 bedeuten, worin R₁ und R₂ unabhängig voneinander Wasserstoff, Halogen, C₁-C₅-Alkyl, C₁-C₅-Alkoxy, -SR₃, -N(R₃)₂, -CF₃, -CN oder eine Gruppe der Formeln 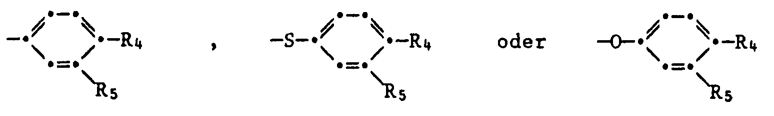 bedeuten, R₃ C₁-C₅-Alkyl ist und R₄ und R₅ unabhängig voneinander Wasserstoff, Halogen, C₁-C₅-Alkyl, C₁-C₅-Alkoxy, -SR₃ oder -CN bedeuten, und
b) mindestens eine lineare Chinacridonverbindung der Formeln 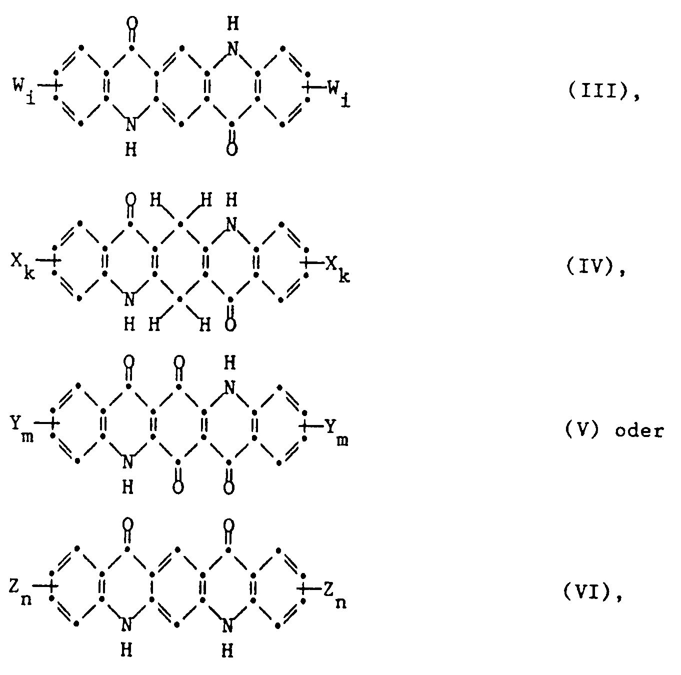 worin W, X, Y und Z unabhängig voneinander Halogen, C₁-C₅-Alkyl, C₁-C₅-Alkoxy und i, k, m und n Null, 1 oder 2 bedeuten, wobei sich die Röntgenbeugungsdiagramme der Einzelkomponenten unterscheiden.

2. Feste Lösungen gemäss Anspruch 1, dadurch gekennzeichnet, dass sie mindestens eine Verbindung der Formeln I oder II mit der in Anspruch 1 angegebenen Bedeutung, und eine Chinacridonverbindung der Formel III, worin W Chlor oder Methyl und i Null oder 1 bedeuten, enthalten.

3. Feste Lösungen gemäss Anspruch 1, dadurch gekennzeichnet, dass sie mindestens eine Verbindung der Formeln I oder II mit der in Anspruch 1 angegebenen Bedeutung, eine Chinacridonverbindung der Formel V, worin m Null bedeutet und eine Chinacridonverbindung der Formel IV, worin k Null ist, enthalten.

4. Feste Lösungen gemäss Anspruch 1, dadurch gekennzeichnet, dass sie mindestens eine Verbindung der Formeln I oder II mit der in Anspruch 1 angegebenen Bedeutung, eine Chinacridonverbindung der Formel V, worin m Null bedeutet und eine Chinacridonverbindung der Formel II, worin i Null ist, enthalten.

5. Feste Lösungen gemäss Anspruch 1, dadurch gekennzeichnet, dass sie mindestens eine Verbindung der Formeln I oder II mit der in Anspruch 1 angegebenen Bedeutung und je eine Chinacridonverbindung der Formeln III, IV und V, worin i, k und m Null bedeuten, enthalten.

6. Feste Lösungen gemäss Anspruch 1, dadurch gekennzeichnet, dass sie eine Verbindung der Formel I und mindestens eine Verbindung der Formeln III, IV, V oder VI enthalten, wobei die Verbindungen der Formeln I, III, IV, V und VI die in Anspruch 1 angegebene Bedeutung haben.

7. Feste Lösungen gemäss Anspruch 6, dadurch gekennzeichnet, dass sie eine Verbindung der Formel I enthalten, worin A eine Gruppe der Formeln 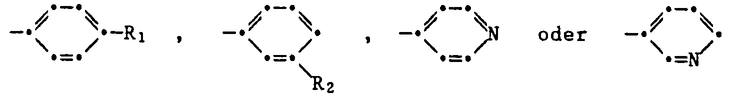 bedeutet, worin R₁ Wasserstoff, Chlor, Brom, Cyano, Methyl, Ethyl, tert.-Butyl oder Phenyl und R₂ Wasserstoff, Chlor, Methyl oder Cyano bedeuten.

8. Feste Lösung gemäss Anspruch 1, dadurch gekennzeichnet, dass sie die beiden Verbindungen der Formeln 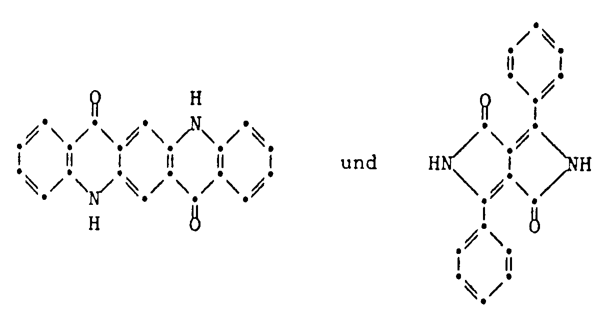 enthält.

9. Verfahren zum Färben von hochmolekularem organischem Material durch Einarbeiten von festen Lösungen gemäss Anspruch 1.

10. Hochmolekulares organisches Material enthaltend feste Lösungen gemäss Anspruch 1.

## Patentansprüche (Patentansprüche für folgende(n) Vertragsstaat(en): ES)

1. Verfahren zur Herstellung von festen Lösungen von Pyrrolo-[3,4-c]-pyrrolen und Chinacridonen, durch Umsetzung von
a) mindestens einer Verbindung der Formeln 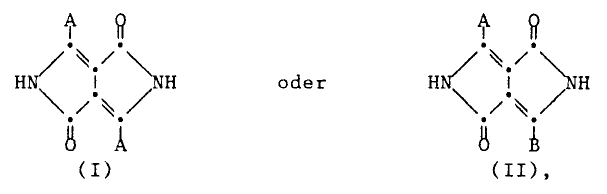 worin A und B unabhängig voneinander eine der Gruppen der Formeln 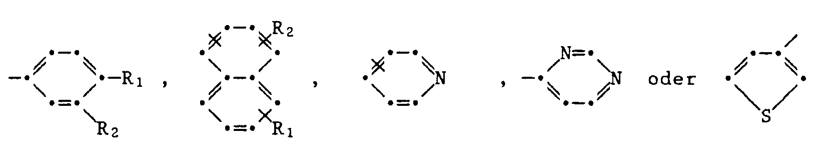 bedeuten, worin R₁ und R₂ unabhängig voneinander Wasserstoff, Halogen, C₁-C₅-Alkyl, C₁-C₅-Alkoxy, -SR₃, -N(R₃)₂, -CF₃, -CN oder eine Gruppe der Formeln 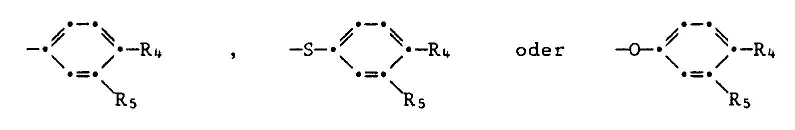 bedeuten, R₃ C₁-C₅-Alkyl ist und R₄ und R₅ unabhängig voneinander Wasserstoff, Halogen, C₁-C₅-Alkyl, C₁-C₅-Alkoxy, -SR₃ oder -CN bedeuten, mit
b) mindestens einer linearen Chinacridonverbindung der Formeln 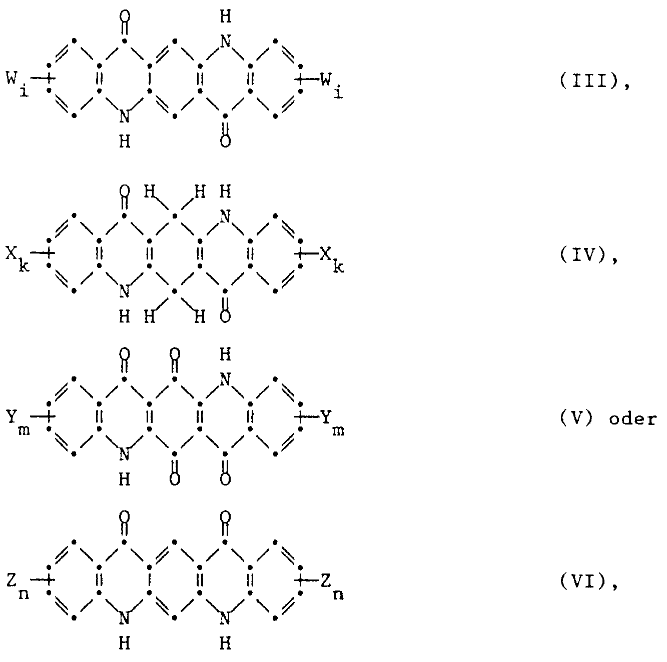 worin W, X, Y und Z unabhängig voneinander Halogen, C₁-C₅-Alkyl, C₁-C₅-Alkoxy und i, k, m und n Null, 1 oder 2 bedeuten, wobei sich die Röntgenbeugungsdiagramme der so erhaltenen festen Lösungen von der Summe der Röntgenbeugungsdiagramme der Einzelkomponenten unterscheiden.

2. Verfahren zur Herstellung von festen Lösungen gemäss Anspruch 1, dadurch gekennzeichnet, dass mindestens eine Verbindung der Formeln I oder II mit der in Anspruch 1 angegebenen Bedeutung, mit einer Chinacridonverbindung der Formel III, worin W Chlor oder Methyl und i Null oder 1 bedeuten, umgesetzt wird.

3. Verfahren zur Herstellung von festen Lösungen gemäss Anspruch 1, dadurch gekennzeichnet, dass mindestens eine Verbindung der Formeln I oder II mit der in Anspruch 1 angegebenen Bedeutung, eine Chinacridonverbindung der Formel V, worin m Null bedeutet, mit einer Chinacridonverbindung der Formel IV, worin k Null ist, umgesetzt wird.

4. Verfahren zur Herstellung von festen Lösungen gemäss Anspruch 1, dadurch gekennzeichnet, dass mindestens eine Verbindung der Formeln I oder II mit der in Anspruch 1 angegebenen Bedeutung, eine Chinacridonverbindung der Formel V, worin m Null bedeutet, mit einer Chinacridonverbindung der Formel III, worin i Null ist, umgesetzt wird.

5. Verfahren zur Herstellung von festen Lösungen gemäss Anspruch 1, dadurch gekennzeichnet, dass mindestens eine Verbindung der Formeln I oder II mit der in Anspruch 1 angegebenen Bedeutung mit je einer Chinacridonverbindung der Formeln III, IV und V, worin i, k und m Null bedeuten, umgesetzt wird.

6. Verfahren zur Herstellung von festen Lösungen gemäss Anspruch 1, dadurch gekennzeichnet, dass eine Verbindung der Formel I mit mindestens einer Verbindung der Formeln III, IV, V oder VI umgesetzt wird, wobei die Verbindungen der Formeln I, III, IV, V und VI die in Anspruch 1 angegebene Bedeutung haben.

7. Verfahren zur Herstellung von festen Lösungen gemäss Anspruch 6, dadurch gekennzeichnet, dass eine Verbindung der Formel I umgesetzt wird, worin A eine Gruppe der Formeln 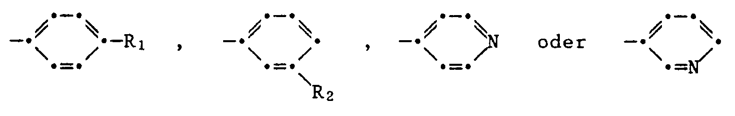 bedeutet, worin R₁ Wasserstoff, Chlor, Brom, Cyano, Methyl, Ethyl, tert.-Butyl oder Phenyl und R₂ Wasserstoff, Chlor, Methyl oder Cyano bedeuten.

8. Verfahren zur Herstellung von festen Lösungen gemäss Anspruch 1, dadurch gekennzeichnet, dass die beiden Verbindungen der Formeln 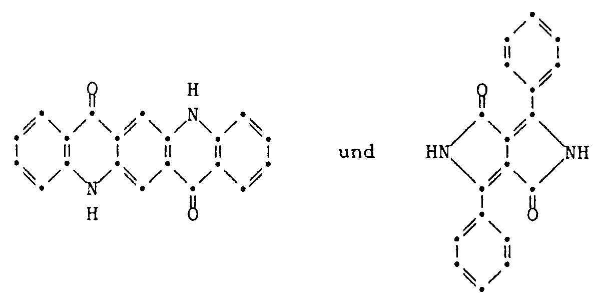 miteinander umgesetzt werden.

## Claims (Claims for the following Contracting State(s): DE, GB, FR, IT, CH, LI)

1. A solid solution of pyrrolo[3,4-c]pyrroles and quinacridones which contains
a) at least one compound of the formula 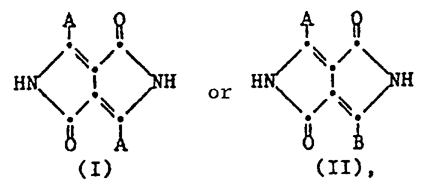 in which A and B are independently of each other one of the groups of the formula 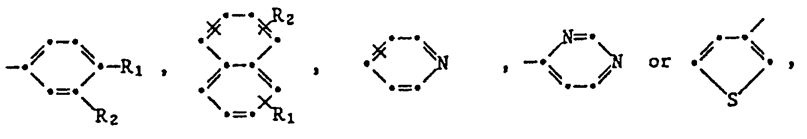 in which R₁ and R₂ are independently of each other hydrogen, halogen. C₁-C₅alkyl, C₁-C₅alkoxy, -SR₃, -N(R₃)₂, -CF₃, -CN or a group of the formula 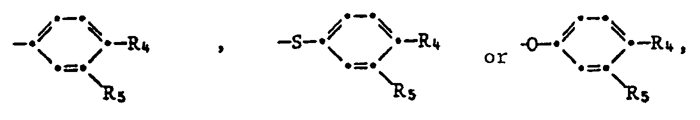 R₃ is C₁-C₅alkyl and R₄ and R₅ are independently of each other hydrogen, halogen, C₁-C₅alkyl, C₁-C₅alkoxy, -SR₃ or -CN, and
b) at least one linear quinacridone compound of the formula 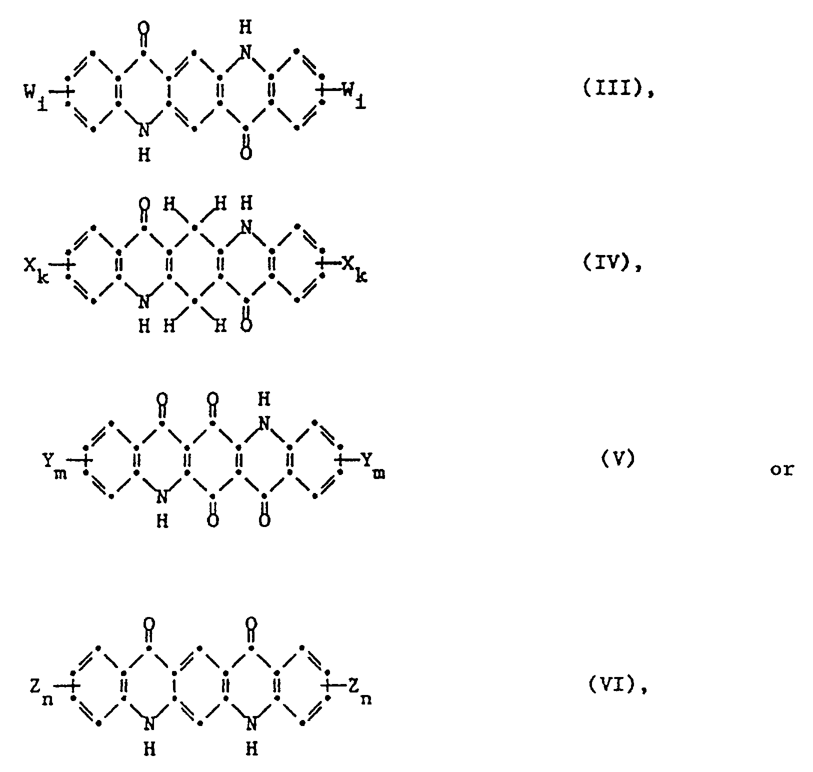 in which W, X, Y and Z are independently of each other halogen, C₁-C₅alkyl, C₁-C₅alkoxy, and i, k, m and n are zero, 1 or 2, the X-ray diffraction diagrams of the solid solutions differing from the sum of the X-ray diffraction diagrams of the individual components.

2. A solid solution according to claim 1, which contains at least one compound of the formula I or II having the meaning indicated in claim 1 and a quinacridone compound of the formula III in which W is chlorine or methyl and i is zero or 1.

3. A solid solution according to claim 1, which contains at least one compound of the formula I or II having the meaning indicated in claim 1, a quinacridone compound of the formula V in which m is zero and a quinacridone compound of the formula IV in which k is zero.

4. A solid solution according to claim 1, which contains at least one compound of the formula I or II having the meaning indicated in claim 1, a quinacridone compound of the formula V in which m is zero and a quinacridone compound of the formula III in which i is zero.

5. A solid solution according to claim 1, which contains at least one compound of the formula I or II having the meaning indicated in claim 1 and one each of a quinacridone compound of the formulae III, IV and V in which i, k and m are zero.

6. A solid solution according to claim 1, which contains a compound of the formula I and at least one compound of the formula III, IV, V or VI, the compounds of the formulae I, III, IV, V and VI having the meaning indicated in claim 1.

7. A solid solution according to claim 6, which contains a compound of the formula I in which A is a group of the formula 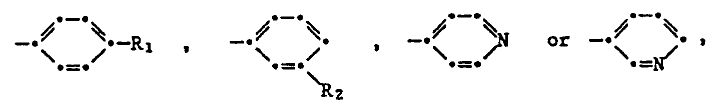 in which R₁ is hydrogen, chlorine, bromine, cyano, methyl, ethyl, tert-butyl or phenyl and R₂ is hydrogen, chlorine, methyl or cyano.

8. A solid solution according to claim 1, which contains the two compounds of the formulae

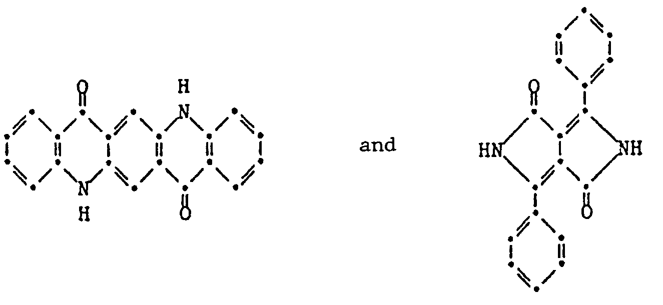

9. A process for colouring high molecular weight organic material by incorporating a solid solution according to claim 1.

10. A high molecular weight organic material containing a solid solution according to claim 1.

## Claims (Claims for the following Contracting State(s): ES)

1. A process for the preparation of a solid solution of pyrrolo[3,4-c]-pyrroles and quinacridones, by reacting
a) at least one compound of the formula 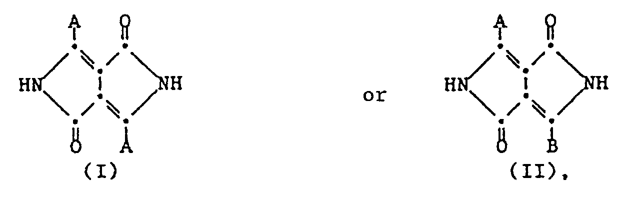 in which A and B are independently of each other one of the groups of the formula 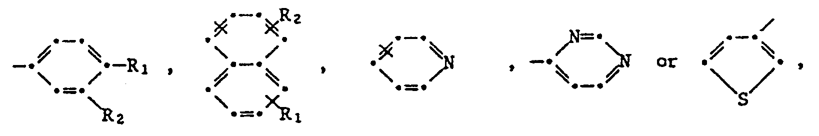 in which R₁ and R₂ are independently of each other hydrogen, halogen, C₁-C₅alkyl, C₁-C₅alkoxy, -SR₃, -N(R₃)₂, -CF₃, -CN or a group of the formulae 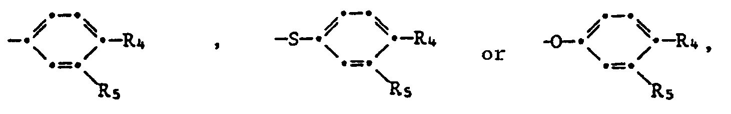 R₃ is C₁-C₅alkyl and R₄ and R₅ are independently of each other hydrogen, halogen, C₁-C₅alkyl, C₁-C₅alkoxy, -SR₃ or -CN, with
b) at least one linear quinacridone compound of the formula 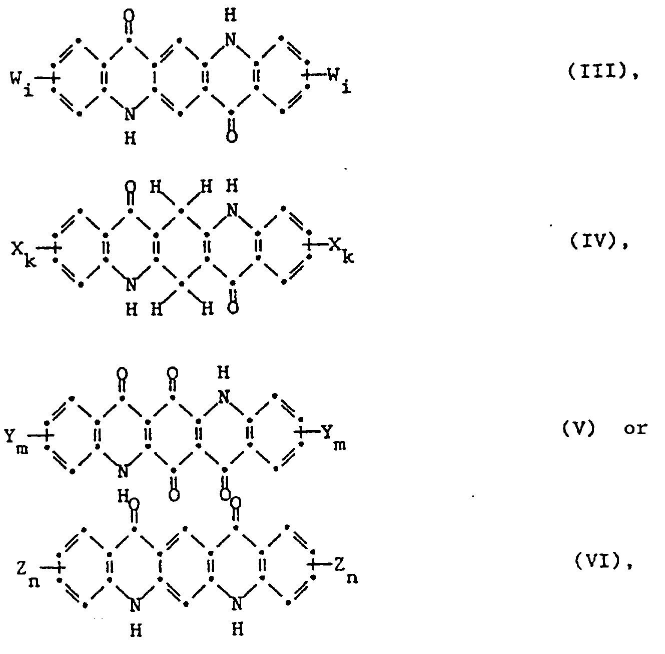 in which W, X, Y and Z are independently of each other halogen, C₁-C₅alkyl, C₁-C₅alkoxy, and i, k, m and n are zero, 1 or 2, the X-ray diffraction diagrams of the solid solutions thus obtained differing from the sum of the X-ray diffraction diagrams of the individual components.

2. A process for the preparation of a solid solution according to claim 1, which comprises reacting at least one compound of the formula I or II having the meaning indicated in claim 1 with a quinacridone compound of the formula III in which W is chlorine or methyl and i is zero or 1.

3. A process for the preparation of a solid solution according to claim 1, which comprises reacting at least one compound of the formula I or II having the meaning indicated in claim 1, a quinacridone compound of the formula V in which m is zero with a quinacridone compound of the formula IV in which k is zero.

4. A process for the preparation of a solid solution according to claim 1, which comprises reacting at least one compound of the formula I or II having the meaning indicated in claim 1, a quinacridone compound of the formula V in which m is zero with a quinacridone compound of the formula III in which i is zero.

5. A process for the preparation of a solid solution according to claim 1, which comprises at least one compound of the formula I or II having the meaning indicated in claim 1 with one each of a quinacridone compound of the formulae III, IV and V in which i, k and m are zero.

6. A process for the preparation of a solid solution according to claim 1, which comprises reacting a compound of the formula I with at least one compound of the formula III, IV, V or VI, the compounds of the formulae I, III, IV, V and VI having the meaning indicated in claim 1.

7. A process for the preparation of a solid solution according to claim 6, which comprises reacting a compound of the formula I in which A is a group of the formula 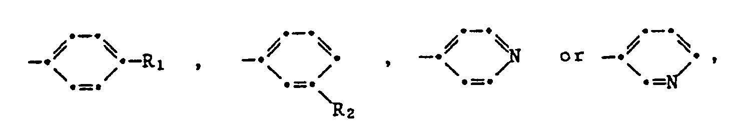 in which R₁ is hydrogen, chlorine, bromine, cyano, methyl, ethyl, tert-butyl or phenyl and R₂ is hydrogen, chlorine, methyl or cyano.

8. A process for the preparation of a solid solution according to claim 1, which comprises reacting the two compounds of the formulae 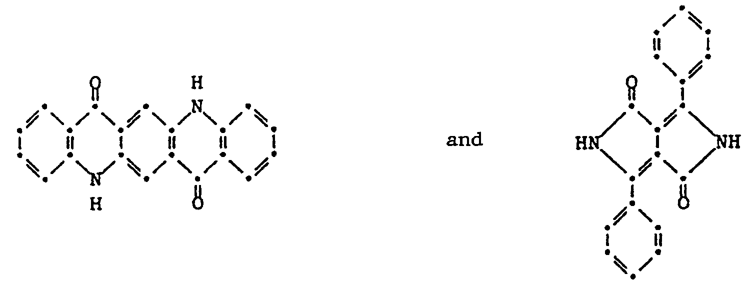 with one another.

## Revendications (Revendications pour l'(les) Etat(s) contractant(s) suivant(s): DE, GB, FR, IT, CH, LI)

1. Solutions solides de pyrrolo-[3,4-c]-pyrroles et de quinacridones, contenant
a) au moins un composé de formule 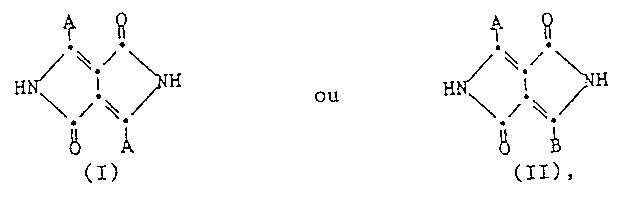 dans lesquelles A et B représentent chacun, indépendamment l'un de l'autre, un des groupes de formule 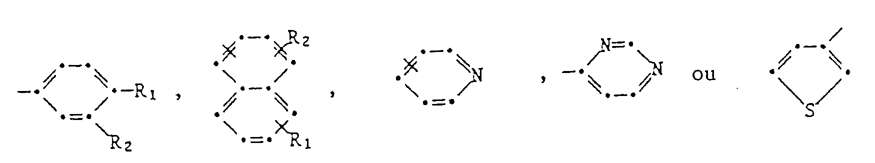 où R₁ et R₂ représentent chacun, indépendamment l'un de l'autre, un atome d'hydrogène ou d'halogène, un groupe alkyle en C₁ à C₅, alcoxy en C₁ à C₅, - SR₃, -N(R₃)₂, -CF₃, -CN ou un groupe de formule 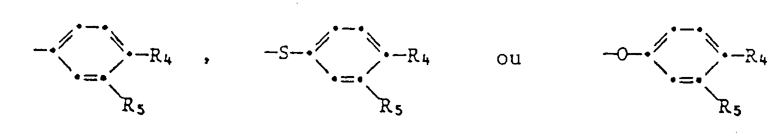 où R₃ représente un groupe alkyle en C₁ à C₅, et R₄ et R₅ représentent chacun, indépendamment l'un de l'autre, un atome d'hydrogène ou d'halogène, un groupe alkyle en C₁ à C₅, alcoxy en C₁ à C₅, -SR₃ ou CN , et
(b) au moins une quinacridone linéaire répondant aux formules 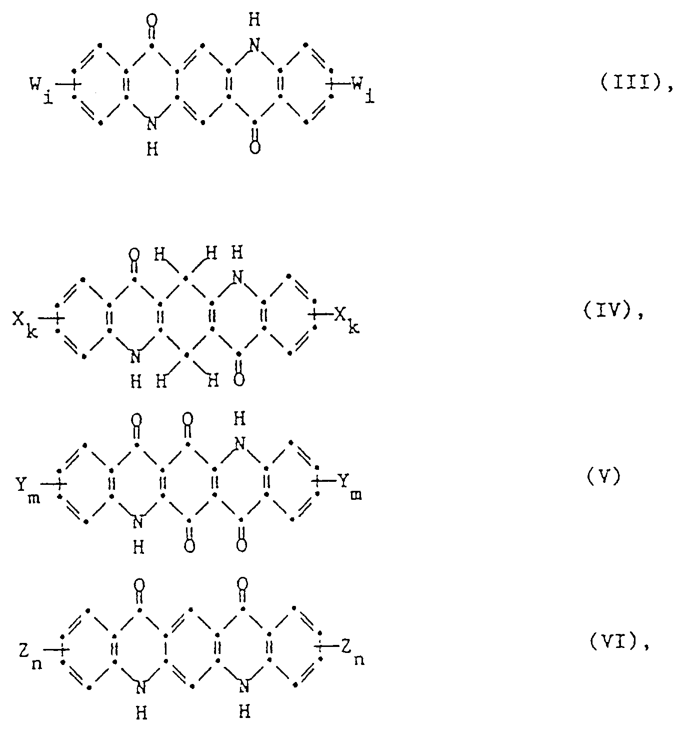 dans lesquelles W, X, Y et Z représentent chacun, indépendamment l'un de l'autre, un atome d'halogène, un groupe alkyle en C₁ à C₅, alcoxy en C₁ à C₅; et i, k, m et n sont nuls ou valent 1 ou 2, les diagrammes ou spectres de diffraction des rayons X caractérisant les solutions solides différant de la somme des diagrammes ou spectres de diffraction de rayons X des composants individuels.

2. Solutions solides selon la revendication 1, caractérisées en ce qu'elles contiennent au moins un composé répondant aux formules I ou II ayant le sens indiqué à la revendication 1, et une quinacridone de formule III, dans laquelle W représente un atome de chlore ou un groupe méthyle et i est nul ou vaut 1.

3. Solutions solides selon la revendication 1, caractérisées en ce qu'elles contiennent au moins un composé répondant aux formules I ou II ayant le sens indiqué à la revendication 1, une quinacridone de formule V, dans laquelle m est nul et une quinacridone de formule IV, dans laquelle k est nul.

4. Solutions solides selon la revendication 1, caractérisées en ce qu'elles contiennent au moins un composé répondant aux formules I ou II ayant le sens indiqué à la revendication 1, une quinacridone de formule V, dans laquelle m est nul et une quinacridone de formule III, dans laquelle i est nul.

5. Solutions solides selon la revendication 1, caractérisées en ce qu'elles contiennent au moins un composé répondant aux formules I ou II ayant le sens indiqué à la revendication 1, et une quinacridone répondant chacune aux formules III, IV et V, dans lesquelles i, k et m sont nuls.

6. Solutions solides selon la revendication 1, caractérisées en ce qu'elles contiennent au moins un composé de formule I et au moins un composé répondant aux formules III, IV, V, ou VI, les composés répondant aux formules I,III,IV, V et VI ayant le sens indiqué à la revendication 1.

7. Solutions solides selon la revendication 6, caracterisées en ce qu'elles contiennent un composé de formule I, dans laquelle A représente un groupe répondant aux formules : 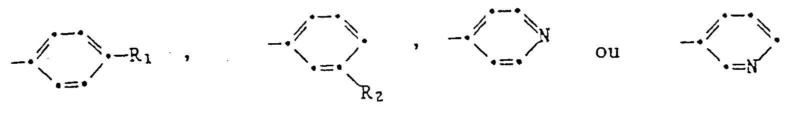 dans lesquelles R₁ représente un atome d'hydrogène, de chlore ou de brome, un groupe cyano, méthyle, éthyle, tert.-butyle ou phényle, et R₂ représente un atome d'hydrogène ou de chlore ou un groupe méthyle ou cyano.

8. Solution solide selon la revendication 1, caracterisée en ce qu'elle content les deux composés répondant aux formules

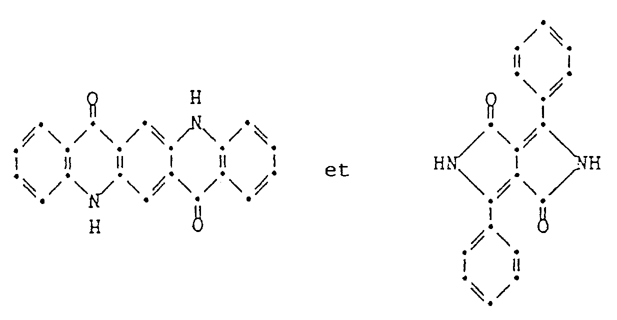

9. Procédé pour teindre et colorer de la matière organique à poids moléculaire élevé, par incorporation de solutions solides selon la revendication 1.

10. Matières organiques à poids moléculaire élevé, contenant des solutions solides selon la revendication 1.

## Revendications (Revendications pour l'(les) Etat(s) contractant(s) suivant(s): ES)

1. Procédé pour préparer des solutions solides de pyrzolo-[3,4-c]-pyrroles et de quinacridones, par réaction de:
a) au moins un composé répondant aux formules 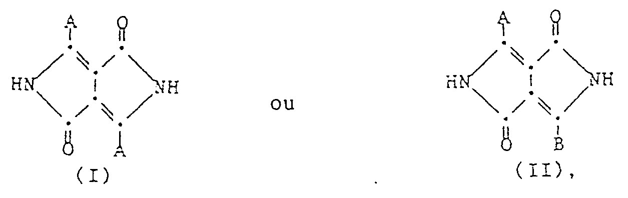 (dans lesquelles A et B représentent chacun, indépendamment l'un de l'autre, l'un des groupes de formules 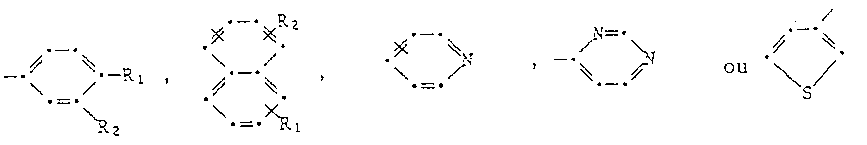 dans lesquelles R₁ et R₂ représentant chacun indépendamment l'un de l'autre, un atome d'hydrogène ou d'halogène, un groupe alkyle en C₁ à C₅, alcoxy en C₁ à C₅, -SR₃, -N(R₃)₂, -CF₃, -CN ou un groupe de formule 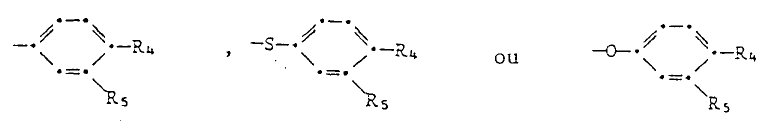 où R₃ représente un groupe alkyle en C₁ à C₅ et R₄ et R₅ représentent chacun, indépendamment l'un de l'autre, un atome d'hydrogène, un atome d'halogène, un groupe alkyle en C₁ à C₅, un groupe alcoxy en C₁ à C₅, -SR₃ ou -CN , avec
(b) au moins une quinacridone linéaire répondant aux formules 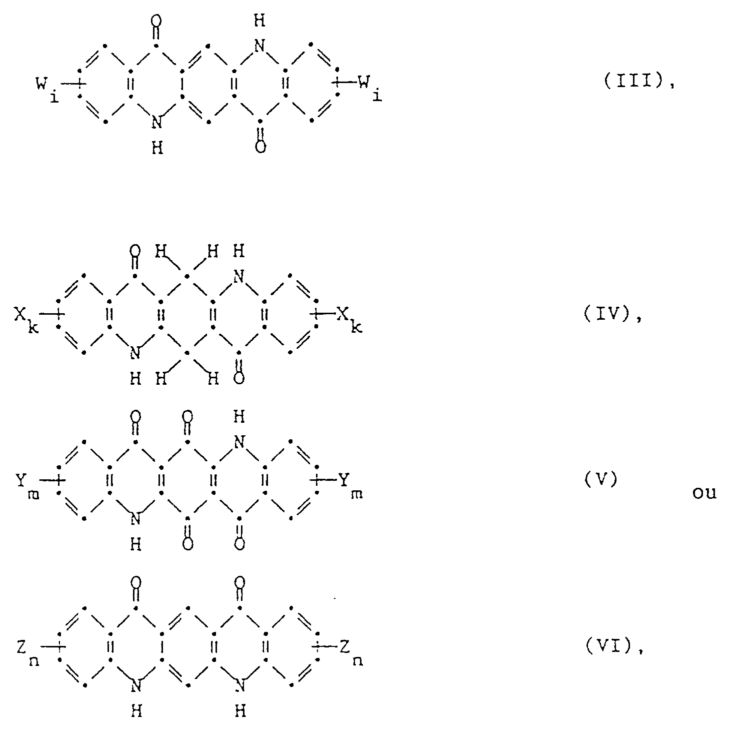 dans lesquelles W, X, Y et Z représentent chacun, indépendamment l'un de l'autre, un atome d'halogène, un groupe alkyle en C₁ à C₅, alcoxy en C₁ à C₅ , et i, k, m et n sont nuls ou valent lou 2, les diagrammes ou spectres de diffraction des rayons X caractérisant les solutions solides ainsi obtenues différant de la somme des diagrammes ou spectres de diffraction de rayons X des composants individuels.

2. Procédé pour préparer des solutions solides selon la revendication 1, caractérisé en ce qu'on fait réagir au moins un composé de formules I ou II, ayant le sens indiqué à la revendication 1, avec une quinacridone de formule III, dans laquelle W représente un atome de chlore ou un groupe méthyle et i est nul ou vaut 1.

3. Procédé pour préparer des solutions solides selon la revendication 1, caractérisé en ce qu'on fait réagir au moins un composé de formules I ou II, ayant le sens indiqué à la revendication 1, une quinacridone de formule V, dans laquelle m est nul, avec une quinacridone de formule IV, dans laquelle k est nul.

4. Procédé de préparation de solutions solides selon la revendication 1, caractérisé en ce qu'on fait réagir au moins un composé de formules I ou II, ayant le sens indiqué à la revendication 1, avec une quinacridone de formule III, dans laquelle i est nul.

5. Procédé de préparation de solutions solides selon la revendication 1, caractérisé en ce qu'on fait réagir au moins un composé de formules I ou II, ayant le sens indiqué à la revendication 1, avec une quinacridone répondant chacune à la formule III, IV et V, dans lesquelles i, k et m sont chacun nuls.

6. Procédé de préparation de solutions solides selon la revendication 1, caractérisé en ce qu'on fait réagir un composé de formule I, avec au moins un composé répondant aux formules II, IV, V ou VI, les composés répondant aux formules I,II,IV,V et VI ayant le sens indiqué à la revendication 1.

7. Procédé de préparation de solutions solides selon la revendication 6, caractérisé en ce qu'on fait réagir un composé de formule I, dans laquelle A représente un groupe de formule : 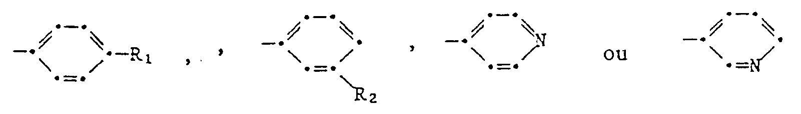 formules dans lesquelles R₁ représente un atome d'hydrogène, de chlore, de brome, un groupe cyano, méthyle, éthyle, tert.-butyle ou phényle et R₂ représente un atome d'hydrogène, un atome de chlore, un groupe méthyle ou cyano.

8. Procédé de préparation de solutions solides selon la revendication 1, caractérisé en ce qu'on fait réagir l'un avec l'autre les deux composés répondant aux formules :
